# EUROPÄISCHE PATENTSCHRIFT

(11) **EP 4 167 896 B1**
(45) Veröffentlichungstag und Bekanntmachung des Hinweises auf die Patenterteilung: **15.10.2025**
(21) Anmeldenummer: 21737347.1
(22) Anmeldetag: 17.06.2021
(51) Int. Cl.: A61C 5/40, A61C 17/02, A61C 17/12, A61C 17/20, A61C 1/07, A61C 1/14, A61C 3/03, A61C 17/08

(54) **SPÜLANORDNUNG ZUM REINIGEN VON ZAHNWURZELKANÄLEN**
IRRIGATION ASSEMBLY FOR CLEANING TOOTH ROOT CANALS
ENSEMBLE D'IRRIGATION POUR LE NETTOYAGE DE CANAUX RADICULAIRES

(30) Priorität: 17.06.2020 DE 102020116029
(43) Veröffentlichungstag der Anmeldung: 26.04.2023
(73) Patentinhaber: Köhrer, Dennis Manuel, 41466 Neuss NRW (DE)
(72) Erfinder: Köhrer, Dennis Manuel, 41466 Neuss NRW (DE)
(74) Vertreter: Paul & Albrecht Patentanwälte PartG mbB
(86) Internationale Anmeldenummer: PCT/EP2021/066397
(87) Internationale Veröffentlichungsnummer: WO 2021/255162

(56) Entgegenhaltungen:
- WO-A1-2011/136798
- WO-A1-2017/011507
- WO-A1-2017/138018
- CN-A- 105 411 711
- US-A- 5 490 779
- US-A1- 2008 044 789
- US-B2- 8 388 345

## Beschreibung

Die vorliegende Erfindung betrifft eine Zahnwurzelkanal-Spülanordnung zum Reinigen von Zahnwurzelkanälen eines Patienten mit einer Unterdruckeinrichtung, einem Absaugelement mit einer länglich ausgestalteten Absaugspitze, die zumindest teilweise aus einem flexiblen Material besteht und an einem vorderen Ende des Absaugelements positioniert ist, wobei in dem Absaugelement ein Absaugkanal ausgebildet ist, der sich ausgehend vom hinteren Ende des Absaugelements in Richtung von dessen vorderen Ende bis in die Absaugspitze erstreckt, die Absaugspitze wenigstens eine Ansaugöffnung aufweist, und das hintere Ende des Absaugelements über eine Leitung, insbesondere einen Verbindungsschlauch, mit der Unterdruckeinrichtung verbunden ist, so dass Spülflüssigkeit mit darin enthaltenen Geweberesten und/oder Bakterien mittels eines von der Unterdruckeinrichtung erzeugten Unterdrucks über die Ansaugöffnungen in den Absaugkanal und über diesen zur Unterdruckeinrichtung gesaugt werden kann.

Außerdem betrifft die Erfindung ein Absaugelement zum Absaugen von Spülflüssigkeit mit darin enthaltenen Geweberesten und/oder Bakterien aus einem Zahnwurzelkanal eines Patienten mit einer länglich ausgestalteten Absaugspitze, die zumindest teilweise aus einem flexiblen Material besteht, wobei das Absaugelement einen Absaugkanal aufweist, der sich ausgehend von dem hinteren Ende des Absaugelements in Richtung von dessen vorderem Ende bis in die Absaugspitze erstreckt und wobei die Absaugspitze wenigstens eine Ansaugöffnung aufweist, die in den Absaugkanal mündet.

Offenbart wird auch ein nicht beanspruchtes Verfahren zum Reinigen von Zahnwurzelkanälen eines Patienten, bei welchem einem zu reinigenden Zahlwurzelkanal eine Spülflüssigkeit zugeführt und diese mit darin enthaltenen Geweberesten und/oder über ein Absaugelement mit einer länglich ausgestalteten Absaugspitze, die zumindest teilweise aus einem flexiblen Material besteht und an einem vorderen Ende des Absaugelements positioniert ist, mittels einer Unterdruckeinrichtung abgesaugt wird.

Die Zahnmedizin umfasst eine Vielzahl von Behandlungsmethoden, darunter auch endodontische Methoden zur Behandlung des erkrankten Zahninneren, wie die Wurzelkanalbehandlung. Mittels einer Wurzelkanalbehandlung kann ein Zahn, dessen Pulpa schwer entzündet oder abgestorben ist, erhalten werden. Dabei wird der Zahnwurzelkanal einem Reinigungsprozess unterzogen, bei dem das sich im Inneren des Zahnwurzelkanals befindliche, infizierte Gewebe entfernt wird. Insbesondere wird das den Wurzelkanal umgebende infizierte Wurzeldentin durch Herausfeilen beseitigt, wobei der Zahnwurzelkanal erweitert wird. Dazu werden spezielle endodontische Instrumente wie endodontische Feilen oder endodontische Bohrer eingesetzt. Während des Reinigungsprozesses wird der Zahnwurzelkanal wiederholt mit einer Spüllösung durchgespült.

Den klassischen Reinigungsmethoden liegt die Problematik zugrunde, dass sich ein Großteil des verzweigten Wurzelkanalsystems der mechanischen und chemischen Reinigung aufgrund der anatomischen Komplexität entzieht.

Aus der US 8 388 345 B2 ist eine Anordnung zur Reinigung eines Wurzelkanals bekannt, die ausgebildet ist, um diesen Problemen zu begegnen. Diese umfasst ein Absaugelement mit einer länglich ausgestalteten Absaugspitze, die zumindest teilweise aus einem nicht metallischen flexiblen Material besteht und an einem vorderen Ende des Absaugelements positioniert ist. In dem Absaugelement ist ein Absaugkanal ausgebildet, der sich ausgehend vom hinteren Ende des Absaugelements in Richtung von dessen vorderen Ende bis in die Absaugspitze erstreckt. In der Absaugspitze sind mehrere entlang ihres Umfangs verteilte Ansaugöffnungen ausgebildet, welche die Wandung der Absaugspitze ausgehend von deren äußerer Mantelfläche durchsetzen und in den Absaugkanal münden. Das Absaugelement kann an eine Underdruckeinrichtung angeschlossen werden, um Spülflüssigkeit mit darin enthaltenen Bakterien und Geweberesten aus einem zu reinigenden Zahnwurzelkanal in den Absaugkanal und über diesen zur Unterdruckeinrichtung zu saugen. An das hintere Ende des Absaugelements kann auch ein Treiber angeschlossen werden, über welchen die Absaugspitze in Schwingungen versetzt werden kann, um das in dem Zahnwurzelkanal befindliche Spülmittel zu aktivieren und somit den Reinigungsprozess zu unterstützen.

Eine weitere Ultraschall-Spülanordnung zum Reinigen von Zahnwurzelkanälen eines Patienten ist aus der CN105411711A vorbekannt.

Aufgabe der Erfindung ist, eine insbesondere schallaktivierte Zahnwurzelkanal-Spülanordnung bereitzustellen, mit welcher der Reinigungsprozess eines Zahnwurzelkanals optimiert und insbesondere kontinuierlich durchgeführt werden kann. Des Weiteren sollen ein Absaugelement und eine Halterung für eine solche Zahnwurzelkanal-Spülanordnung zur Verfügung gestellt werden.

Diese Aufgabe wird durch eine Zahnwurzelkanal-Spülanordnung gemäß Anspruch 1 und ein Absaugelement gemäß Anspruch 5 gelöst.

Insbesondere ist bei einer Zahnwurzelkanal-Spülanordnung sowie einem Absaugelement der eingangs genannten Art nach einem ersten Erfindungsaspekt diese Aufgabe dadurch gelöst, dass das Absaugelement einen Innenschwinger aufweist, der in der Absaugspitze gehalten ist und aus deren vorderem Ende ragt, wobei die Absaugspitze und der Innenschwinger an ihrem hinteren Ende miteinander verbunden sind, und vorzugsweise zusätzlich die Absaugspitze derart elastisch ausgebildet und dimensioniert ist, dass sie beim Einführen der Absaugspitze in einen Zahnwurzelkanal diesen im Bereich der Zahnwurzelkanalwandung dichtend verschließt.

Es hat sich gezeigt, dass durch die erfindungsgemäße Ausgestaltung der Absaugspitze die Spülwirkung weiter verbessert werden kann. Hierzu wird eine Absaugspitze aus einem relativ weichen und elastischen Material, insbesondere einem entsprechenden Kunststoffmaterial, wie PE oder PA gefertigt, welche beim Einführen des Absaugelements mit der Zahnwurzelkanalwandung ab einer gewissen Einführtiefe in Kontakt tritt und somit den Zahnwurzelkanal zwischen der Zahnwurzelkanalwandung und der Absaugspitze abdichtet. In Folge dieser Abdichtung entsteht in dem Zahnwurzelkanal durch die Wirkung der Unterdruckeinrichtung ein Unterdruck, welcher schlagartig wieder abfällt, wenn das Absaugelement wieder aus dem Zahnwurzelkanal herausgezogen wird. Die so erzeugte Stoßwelle und das schnelle Ausdehnen und Kollabieren der in dem Zahnwurzelkanal und der darin befindlichen Spüllösung enthaltenen Luftblasen unterstützen die Reinigung des Zahlwurzelkanals und helfen das Gewebe und Debros aus den mechanisch unzugänglichen Bereichen des Zahlwurzelkanalsystems zu lösen und zu entfernen.

Entsprechend ist das Verfahren zum Reinigen von Zahnwurzelkanälen eines Patienten der eingangs genannt Art dadurch gekennzeichnet, dass eine solche Absaugspitze eingesetzt wird, welche derart elastisch ausgebildet und dimensioniert ist, dass sie beim Einführen der Absaugspitze in den Zahnwurzelkanal diesen im Bereich der Zahnwurzelkanal dichtend verschließt, um in dem Zahnwurzelkanal eine Unterdruck erzeugen, und dann wiederholt die Absaugspitze in dem Zahnwurzelkanal hin und her bewegt wird, um den Zahnwurzelkanal im Bereich der Zahnwurzelkanalwandung wieder zu öffnen und dichtend zu verschließen.

Gemäß der beanspruchten Erfindung ist es vorgesehen, dass das Absaugelement einen Innenschwinger aufweist, der in der Absaugspitze gehalten ist und aus deren vorderem Ende ragt, wobei die Absaugspitze und der Innenschwinger an ihrem hinteren Ende verbunden sind. Wenn bei einem Reinigungsprozess über ein Schallhandstück Vibrationen in das Absaugelement eingeleitet werden, um die Absaugspitze in Schwingungen zu versetzen, wird auch der Innenschwinger in entsprechende Vibrationen versetzt und unterstützt somit die Reinigungswirkung an seinen aus der Absaugspitze ragenden vorderen Ende. Der Innenschwinger ist somit insbesondere auch dann noch wirksam, wenn die Absaugspitze den Zahnwurzelkanal dichtend verschließt und in diesem Moment selbst nicht mehr schwingen kann.

Als Metallmaterialien für den hohlen Innenschwinger kommen beispielsweise Nickel-Titan oder Nickel-Titan-Kupfer Legierungen in Betracht. Insbesondere kann der Innenschwinger aus einer wärmebehandelten Nickel-Titan-Legierung mit einer geringen Pseudoelastizität und einer dazu relativ hohen Pseudoplastizität, bevorzugt aus einer martensitischen FGL-Legierung bestehen. Ebenso kann der Innenschwinger aus einer wärmebehandelten Nickel-Titan-Kupfer-Legierung mit einer geringen Pseudoelastizität und einer dazu relativ hohen Pseudoplastizität bestehen.

Alternativ kann der hohle Inenschwinger insbesondere aus Kunststoff und/oder Metall und/oder aus kunststoffbeschichtetem Metall bestehen.

Gemäß einer bevorzugten Ausführungsform besitzt der Innenschwinger einen Außendurchmesser von ≥ 0,1 mm und/oder ≤ 0,5 mm.

Bei einer Weiterbildung der Erfindung ist vorgesehen, dass sich die Absaugspitze zu ihrem vorderen Ende hin verjüngt, wobei die Absaugspitze und einen sich konisch verjüngenden Dichtungsabschnitt aufweist, welcher derart elastisch ausgebildet und dimensioniert ist, dass er beim Einführen der Absaugspitze in einen Zahnwurzelkanal diesen im Bereich der Zahnwurzelkanalwandung dichtend verschließt.

Der Außendurchmesser des konischen Dichtungsabschnittes der Absaugspitze ist bei einer Ausführungsform ≥ 0,4 mm, insbesondere ≤ 0,5 mm und/oder ≥ 1,4 mm, insbesondere ≥ 1,2 mm.

Gemäß der Erfindung ist vorgesehen, dass das Absaugelement ein Verbindungsteil aufweist, an welches die Leitung angeschlossen und in welchem ein Absaugkanalabschnitt ausgebildet ist, und dass die Absaugspitze und der Innenschwinger in ihrem hinteren Ende jeweils an dem Verbindungsteil fixiert und so miteinander verbunden sind, der Innenschwinger in den Absaugkanalabschnitt eingreift und dort an dem Verbindungsteil fixiert ist.

Ferner ist die Aufgabe bei einem Absaugelement der eingangs genannten Art nach dem zweiten Erfindungsaspekt dadurch gelöst, dass an dem hinteren Ende der Absaugspitze ein Verbindungsteil angebracht oder ausgebildet ist, welches Anschlussmittel zur Verbindung mit einer Unterdruckeinrichtung aufweist, und dass das Verbindungsteil Befestigungsmittel zum lösbaren Anbringen des Absaugelements an einer an einem Schallhandstück vorgesehenen oder angebrachten Halterung aufweist.

Dem zweiten Erfindungsaspekt liegt somit die Überlegung zugrunde, die Unterdruck-Spülanordnung und insbesondere deren Absaugelement derartig auszugestalten, dass es möglich ist, während des Spülvorgangs die im Zahnwurzelkanal befindliche Spülflüssigkeit mittels Schallvibrationen, die von einem handelsüblichen Schallhandstück erzeugt und in das Absaugelement eingeleitet werden, in Schwingungen zu versetzen. Es hat sich gezeigt, dass durch die erfindungsgemäß stattfindende Kombination aus einer apikalen Spülung/Unterdruckabsaugung sowie der gleichzeitigen Schallaktivierung und der damit verbundenen Verwirbelung der Spülflüssigkeit die Reinigungswirkung deutlich optimiert werden kann. Vor allem erhöht sich die chemische Wirksamkeit der Spüllösung aufgrund des kontinuierlichen Flüssigkeitsaustausch und die Verwirbelung der Spüllösung. Ferner werden auch alle Bereiche des Zahnwurzelkanals (Seitenkanäle, Istmus etc.) erreicht und gereinigt. Schließlich kann ein Verstopfen der Ansaugöffnungen vermieden und demzufolge ein zuverlässiges kontinuierliches Absaugen der Spülflüssigkeit gewährleistet werden.

Nach einer bevorzugten Weiterbildung der Erfindung kann das Schallhandstück insbesondere an seinem distalen Ende eine Halterung aufweisen, über welche das Absaugelement lösbar an dem Schallhandstück angebracht ist. Alternativ und gemäß einer bevorzugten Ausführungsform ist an dem distalen Ende des Schallhandstücks eine Halterung lösbar montiert, über welche das Absaugelement lösbar an dem Schallhandstück angebracht ist. Dabei können an dem Schallhandstück und der Halterung zueinander korrespondierende Kupplungsmittel vorgesehen sein, über welche die Halterung an dem Schallhandstück montiert ist.

Zweckmäßigerweise weist die Halterung insbesondere an ihrem distalen Ende Befestigungsmittel auf, die mit korrespondierenden Befestigungsmitteln des Absaugelements, insbesondere des Verbindungsteils zusammenwirken, um das Absaugelement lösbar an dem Schallhandstück anzubringen. Gemäß einer Ausgestaltung dieser Ausführungsform weisen die halterungsseitigen Befestigungsmittel einen Haltering mit einer Durchgangsöffnung auf, die von dem Absaugelement durchgriffen wird. Bevorzugt ist die Durchgangsöffnung mit einem Innengewinde versehen und weisen die Befestigungsmittel des Verbindungsteils einen zylindrischen Abschnitt mit einem Außengewinde auf, der in die Durchgangsöffnung eingeschraubt ist, um das Absaugelement auf einfache Weise lösbar an dem Schallhandstück anzubringen.

Weiterhin weist das Verbindungsteil, das beispielsweise auf Kunststoff oder Metall bestehen kann, bevorzugt hinter dem zylindrischen Abschnitt einen sich zum hinteren Ende des Verbindungsteils trichterartig erweiternden Steckabschnitt auf. Die Leitung kann über eine Steckverbindung mit dem Absaugelement, bevorzugt mit dem Verbindungsteil und besonders bevorzugt mit dem Steckabschnitt des Verbindungsteils verbunden sein.

Zur Herstellung und/oder Sicherung der Steckverbindung können an dem Absaugelement, insbesondere dem Verbindungsteil des Absaugelements, und/oder der Leitung Anschlussmittel ausgebildet sein. Beispielsweise können die Anschlussmittel ausgebildet sein, um eine Schlauch/Stecknippel-Verbindung zwischen der Leitung und dem Verbindungsteil herzustellen.

Gemäß einer bevorzugten Ausführungsform nach dem zweiten Erfindungsaspekt ist vorgesehen, dass die Absaugspitze aus einem Edelstahl besteht oder dass die Absaugspitze aus einer wärmebehandelten Nickel-Titan-Legierung, insbesondere einer wärmebehandelten Nickel-Titan-Legierung mit einer geringen Pseudoelastizität und einer dazu relativ hohen Pseudoplastizität, bevorzugt aus einer martensitischen FGL-Legierung besteht, oder dass die Absaugspitze aus einer wärmebehandelten Nickel-Titan-Kupfer-Legierung, insbesondere einer wärmebehandeltes Nickel-Titan-Kupfer-Legierung mit einer geringen Pseudoelastizität und einer dazu relativ hohen Pseudoplastizität besteht oder dass die Absaugspitze Kunststoff besteht.

Dabei kann das vordere Ende der Absaugspitze geschlossen sein, um ein einfaches Absaugen von Gewebe aus dem Zahnwurzelkanal des Patienten zu gewährleisten und ein Verblocken durch Randschluss mit dem Werkzeugkörper zu verhindern. Eine ovale Ausformung kann ebenfalls einen solchen Randschluss verhindern.

Zweckmäßigerweise kann sich die Absaugspitze zu ihrem vorderen Ende hin verjüngen, so dass sie gut in einen Zahnwurzelkanal einführbar ist und/oder der Absaugkanal kann zentral in der Absaugspitze ausgebildet sein. Sie kann in verschiedenen Längen, Konizitäten (Taper) und Durchmessern ausgebildet sein, um eine Anpassung an die individuell unterschiedlichen Zahnanatomien zu ermöglichen.

Der Absaugkanal kann an seinem vorderen Ende unter Bildung einer Ansaugöffnung offen sein. Ebenso kann die Absaugspitze mehrere Ansaugöffnungen aufweisen, welche die Wandung der Absaugspitze ausgehend von deren äußeren Mantelfläche durchsetzen und in den Absaugkanal münden.

Zweckmäßigerweise sind bei dieser Ausführungsform der Erfindung die Ansaugöffnungen am vorderen Ende der Absaugspitze gelegen, sodass durch diese auch sich tief in dem Zahnwurzelkanal des Patienten befindliches Gewebe gelöst und mit der Spülflüssigkeit abgesaugt werden kann und somit eine Spülwirkung bis in die apikale Region ermöglicht wird.

Ebenso können jeweils mehrere Ansaugöffnungen in der Längsrichtung der Ansaugspitze hintereinanderliegend in der Mantelfläche der Absaugspitze ausgebildet sein, wodurch ein Absaugen von Spülflüssigkeit aus dem Zahnwurzelkanal des Patienten über eine entsprechende Länge ermöglicht wird.

Ferner können jeweils mehrere Ansaugöffnungen entlang des Umfangs der Absaugspitze, insbesondere gleichmäßig, zueinander versetzt angeordnet sein, sodass Spülflüssigkeit über den gesamten Umfang der Absaugspitze aus dem Zahnwurzelkanal des Patienten abgesaugt werden kann.

In bevorzugter Weise sind mehrere Reihen von in der Längsrichtung der Absaugspitze hintereinanderliegenden und miteinander fluchtenden Ansaugöffnungen in der Mantelfläche der Absaugspitze ausgebildet und die Reihen sind entlang des Umfangs der Absaugspitze verteilt, wobei insbesondere die Ansaugöffnungen von entlang des Umfangs benachbarten Reihen in der Längsrichtung zueinander versetzt sind.

Als Unterdruckeinrichtung kann entweder die übliche zahnärztliche Absauganlage dienen. Für eine Verbesserung der Saugwirkung wir eine Unterdruckpumpe mit einem Vakuum von 400 bis 1000 mmHg und mehr eingesetzt.

Des Weiteren wird zur Lösung der erfindungsgemäßen Aufgabe eine Unterdruck-Spülanordnung der eingangs genannten Art angegeben, bei der zwischen der Unterdruckeinrichtung und dem Absaugelement eine Ventileinrichtung vorgesehen ist, die ausgebildet ist, mit einer derartigen Frequenz die Leitung zwischen der Unterdruckeinrichtung und dem Absaugelement im Wechsel zu öffnen und zu schließen, dass in dem Absaugkanal der Absaugspitze Longitudinalschwingungen erzeugt werden.

Diese Longitudinalschwingungen erzeugen einen wiederholten Anstieg und Abfall eines über die Unterdruckeinrichtung an den Absaugkanal übertragenen Unterdrucks, sodass die in einem Zahnwurzelkanal befindliche Spülflüssigkeit angeregt wird. Es wird somit ein ähnlicher Effekt erzielt wie durch das wiederholte Abdichten/Öffnen des Zahnwurzelkanals nach dem ersten Erfindungsaspekt, nämlich dass Stoßwellen erzeugt werden, durch welche Luftblasen in der Spüllösung kollabieren und sich wieder ausdehnen.

Schließlich wird eine Halterung vorgeschlagen, die dazu dient, ein (erfindungsgemäßes) Absaugelement mit einem handelsüblichen Schallhandstück zu verbinden. Diese umfasst einen länglichen Halterungskörper, der an seinem einen Ende Kupplungsmittel zum Verbinden mit einem Schallhandstück und an seinem anderen Ende Befestigungsmittel zur lösbaren Anbringung eines Absaugelements aufweist, wobei die Halterung dazu ausgestaltet ist, Schallschwingungen von einem Schallhandstück an das Absaugelement zu übertragen.

Vorteilhafter Weise weisen die Befestigungsmittel eine Durchgangsöffnung auf, die von dem Absaugelement durchgriffen werden kann. Vorzugsweise ist die Durchgangsöffnung mit einem Innengewinde versehen, so dass das Absaugelement in die Durchgangsöffnung eingeschraubt und so mit dem Schallhandstück verbunden werden kann.

Hinsichtlich weiterer Ausgestaltungen der vorliegenden Erfindung wird auf die nachfolgenden Ausführungsbeispiele unter Bezugnahme auf die beiliegenden Zeichnungen verwiesen. In den Zeichnungen zeigen:
- Figur 1: eine schematische Darstellung einer Ausführungsform der erfindungsgemäßen Zahnwurzelkanal-Spülanordnung,
- Figur 2: eine Schnittansicht der Halterung und ein Absaugelement für die Zahnwurzelkanal-Spülanordnung aus Figur 1,
- Figur 3: eine Schnittansicht des vorderen Endbereichs der Absaugspitze des Absaugelements aus Figur 2,
- Figur 4: eine weitere Schnittansicht des vorderen Endbereichs der Absaugspitze des Absaugelements aus Figur 2,
- Figur 5: eine schematische Darstellung einer weiteren Ausführungsform der erfindungsgemäßen Unterdruck-Spülanordnung,
- Figur 6: eine schematische Darstellung eines Zusammenwirkens beider Ausführungsformen der erfindungsgemäßen Unterdruck-Spülanordnung,
- Figur 7: ein Schallhandstück mit einem darin gehaltenen Absaugelement für eine Zahlwurzelkanal-Spülanordnung gemäß einer weiteren Ausführungsform der vorliegenden Erfindung,
- Figur 8: die Anordnung aus Figur 7 in Vorderansicht,
- Figur 9: die Anordnung aus Figur 8 im Schnitt A-A,
- Figur 10: die Anordnung aus Figur 7 ohne Schallhandstück in vergrößerter Darstellung,
- Figur 11: die Anordnung aus Figur 10 im Schnitt entlang der Linie B-B,
- Figur 12: das Absaugelement aus den Figuren 7 bis 11 in vergrößerter und teilweise durchsichtiger Darstellung und
- Figur 13: das Absaugelement aus Figur 12 in einer vergrößerten Draufsicht.

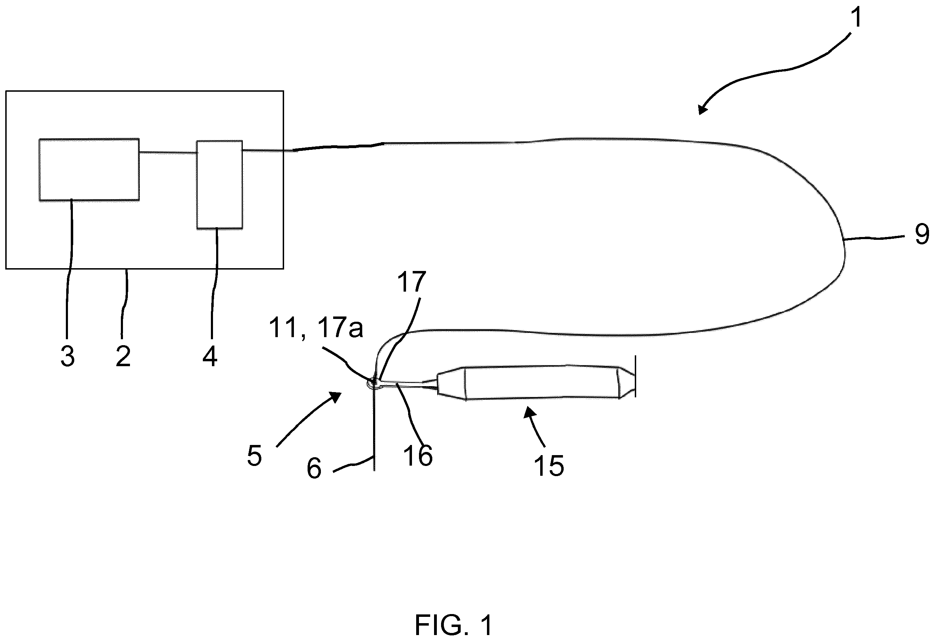

In der Figur 1 ist eine Ausführungsform einer Unterdruck-Spülanordnung 1 zur Reinigung eines Zahnwurzelkanals eines Patienten gemäß der vorliegenden Erfindung dargestellt. Die Unterdruck-Spülanordnung 1 umfasst eine Unterdruckeinrichtung 2, welche als übliche zahnärztliche Absauganlage ausgebildet sein kann, hier jedoch eine Vakuumpumpe 3 mit einem Vakkum von 400 bis 1000 mmHg und einen Unterdruck- und Auffangbehälter 4 aufweist, und ein Absaugelement 5 mit einer länglich ausgestalteten, an seinem vorderen Ende positionierten Absaugspitze 6, die aus einem flexiblen Material besteht.

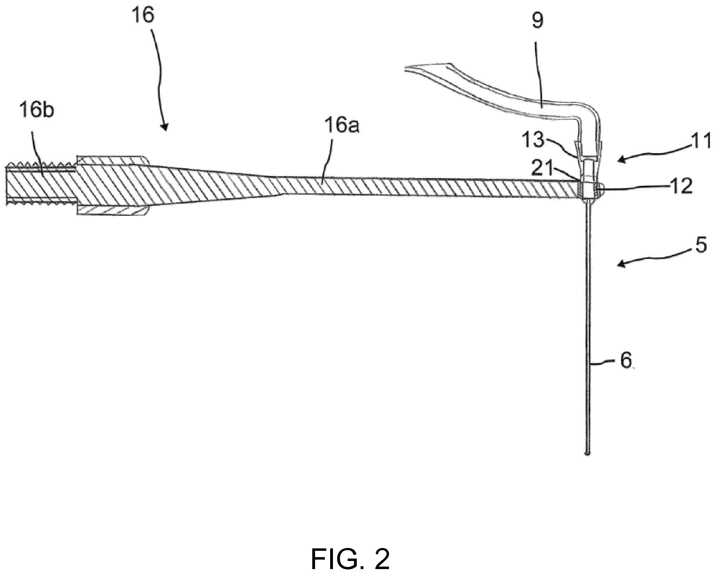

Die Absaugspitze 6 kann in unterschiedlicher Weise ausgebildet sein. In dem Ausführungsbeispiel, welches in den Figuren 2 bis 4 dargestellt ist, ist die Absaugspitze 6 aus einer wärmebehandelten Nickel-Titanlegierung, nämlich einer martensitischen FGL-Legierung mit einer geringen Pseudoelastizität und einer relativ hierzu höhen Pseudoplastizität hergestellt.

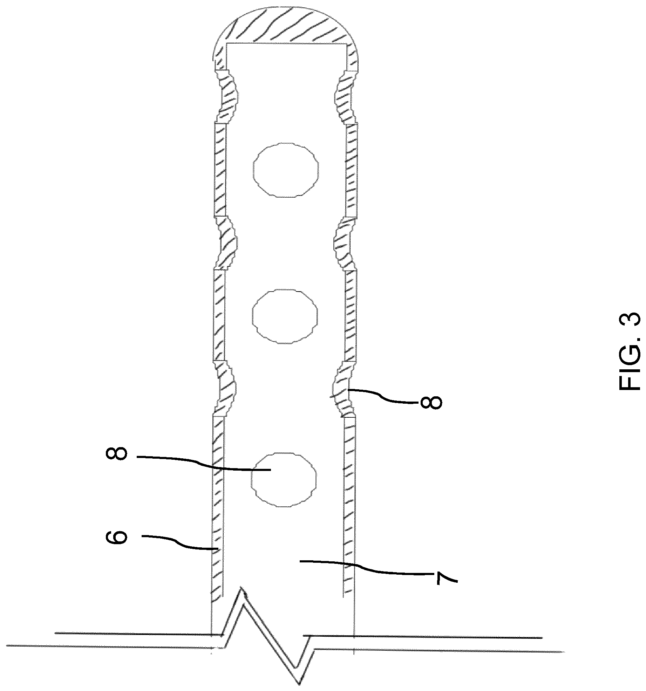

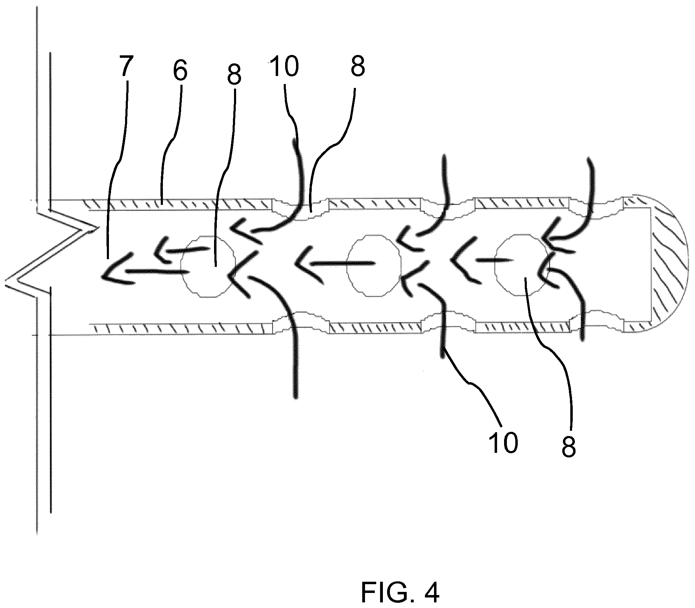

Wie anhand der Figuren 3 und 4 erkennbar, ist in dem Absaugelement 5 zentral ein Absaugkanal 7 ausgebildet, der sich ausgehend vom hinteren Ende des Absaugelements 5 bis zu dem vorderen geschlossenen Ende der Absaugspitze 6 erstreckt.

Ferner weist die Absaugspitze 6 mehrere Ansaugöffnungen 8 auf, welche die Wandung der Absaugspitze 6 ausgehend von deren äußeren Mantelfläche durchsetzen und in den Absaugkanal 7 münden. In dem dargestellten Ausführungsbeispiel sind vier Reihen von jeweils drei in der Längsrichtung der Absaugspitze 6 hintereinanderliegenden und miteinander fluchtenden Ansaugöffnungen 8 ausgebildet. Die Reihen sind gleichmäßig entlang des Umfangs der Absaugspitze 6 verteilt, das heißt mit 90° Versatz zueinander positioniert. Die Ansaugöffnungen 8 in den Reihen sind äquidistant angeordnet, wobei die Ansaugöffnungen 8 von entlang des Umfangs benachbarten Reihen in der Längsrichtung mit einem halben Lochabstand zueinander versetzt sind.

Das Absaugelement 5 ist an seinem hinteren Ende über eine Leitung 9 mit der Unterdruckeinrichtung 2 verbunden, so dass in einen Zahnwurzelkanal eingeleitete Spülflüssigkeit mittels eines von der Unterdruckeinrichtung 2 erzeugten Unterdrucks über die Ansaugöffnungen 8 in den Absaugkanal 7 und über diesen zur Unterdruckeinrichtung 2 gesaugt werden kann. Zur Veranschaulichung ist in Figur 4 anhand von Pfeilen 10 der Strömungsverlauf dargestellt, entlang dessen Spülflüssigkeit abgesaugt wird.

Konkret weist das Absaugelement 5 ein am hinteren Ende der Absaugspitze 6 fest angebrachtes Verbindungsteil 11 aus einem Kunststoffmaterial auf, welches an seinem vorderen Ende 11 einen zylindrischen Abschnitt 12 mit einem Außengewinde umfasst und zentral einen Absaugkanalabschnitt 7a aufweist.

An seinem hinteren Ende ist das Verbindungsteil 11 über eine Steckverbindung mit der Leitung 9 verbunden. Zur Herstellung und/oder Sicherung der Steckverbindung ist an dem Verbindungsteil 11 ein sich trichterartig erweiternder Steckabschnitt 13 mit einer umlaufenden Wulst 14 ausgebildet, welcher bei hergestellter Steckverbindung mit der Leitung 9 nach Art einer Schlauch-Stecknippel-Verbindung in Eingriff kommt.

Die Unterdruck-Spülanordnung 1 weist ferner eine Schalleinrichtung in der Form eines üblichen Schallhandstücks 15 auf, welches an seinem einen Ende Kupplungsmittel trägt, die herstellerspezifisch ausgelegt sind und zur lösbaren Anbringung von Aufsätzen dienen. Gemäß der Erfindung ist als Aufsatz eine Halterung 16 bzw. ein Kupplungselement an dem Schallhandstück 15 angebracht, welche ausgebildet ist und dazu dient, das Absaugelement 5 an dem Schallhandstück 15 zu fixieren, so dass von dem Schallhandstück 15 erzeugte Vibrationen/Schwingungen das Absaugelement 5 eingeleitet werden können, um die Absaugspitze 6 in Schwingungen zu versetzen.

Die Halterung 16 umfasst einen Halterungskörper 16a, der an seinem einen Ende Kupplungsmittel 16b zur Anbringung der Halterung 16 an dem Schallhandstück 15 trägt und an seinem gegenüberliegenden Ende Befestigungsmittel aufweist, um das Absaugelement 5 an der Halterung 16b zu fixieren. Die Befestigungsmittel umfassen einen Haltering 17 mit einer Durchgangsöffnung 17a, welche mit einem Innengewinde versehen ist. Die Durchgangsöffnung 17a wird von dem Absaugelement 5 durchgriffen, welches über das Außengewinde an dem zylindrischen Abschnitt 12 in die Durchgangsöffnung 17a eingeschraubt ist.

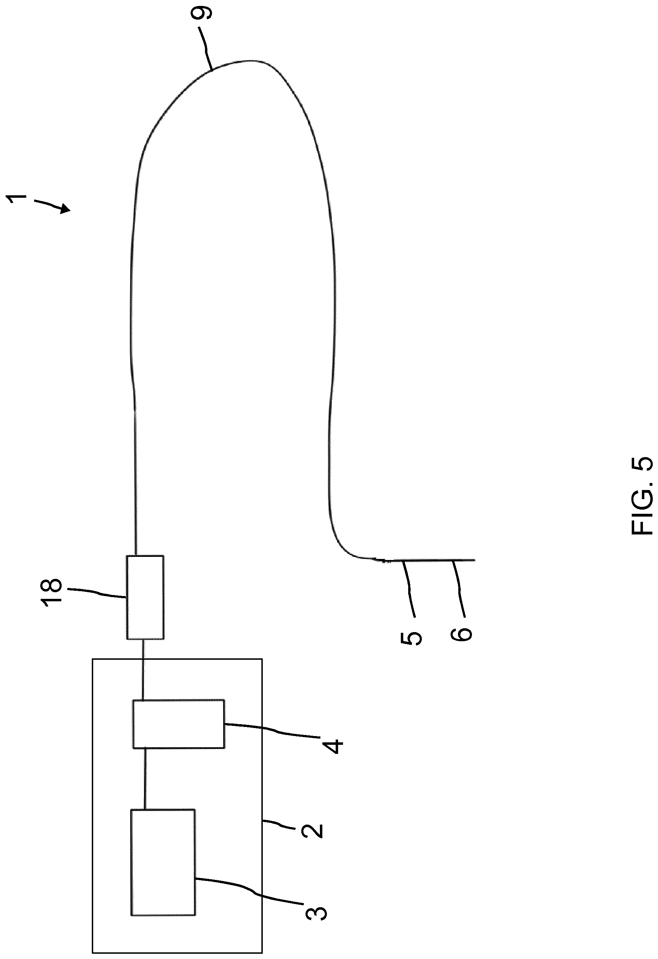

Figur 5 zeigt eine weitere Ausführungsform einer Unterdruck-Spülanordnung 1 gemäß der vorliegenden Erfindung. Diese unterscheidet sich von der in den Figuren 1 bis 4 dargestellten Ausführungsform dadurch, dass sie entlang der Leitung 9, zwischen dem Absaugelement 5 und der Unterdruckeinrichtung 2, eine Ventileinrichtung 18 aufweist und das Schallhandstück 15 fehlt.

Die Ventileinrichtung 18 ist ausgebildet, die Leitung 9 mit einer derartigen Frequenz im Wechsel zu öffnen und schließen, dass in dem Absaugkanal 7 der Absaugspitze 6 Longitudinalschwingungen erzeugt werden. Durch diese wird ein wiederholter Anstieg und Abfall des über die Unterdruckeinrichtung 2 an den Absaugkanal 7 übertragenen Unterdrucks verursacht, wodurch die Spülflüssigkeit im Zahnwurzelkanal angeregt wird.

Somit können das Schallhandstück 15 und die Ventileinrichtung 18 wahlweise oder zusammen eingesetzt werden, um die Absaugspitze 6 in Schwingungen zu versetzen.

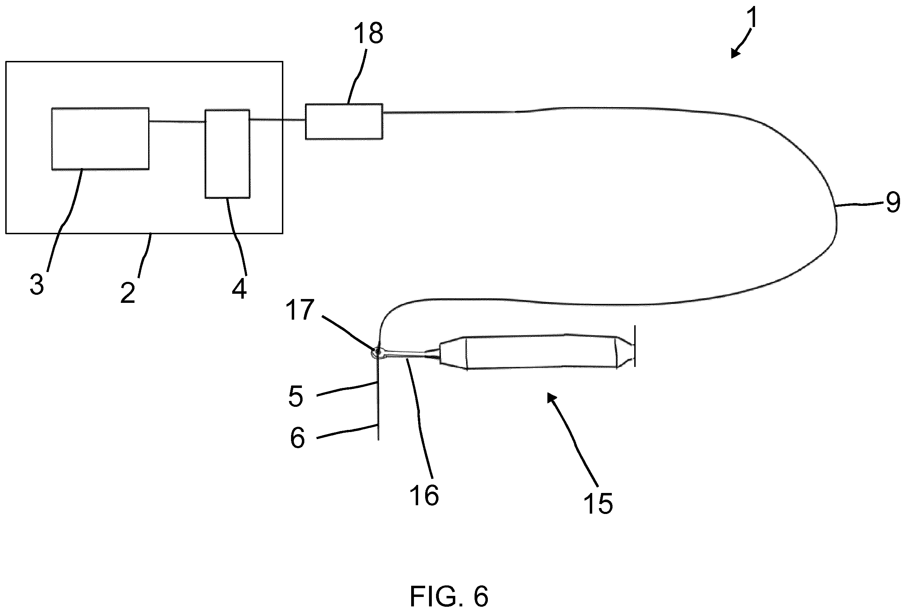

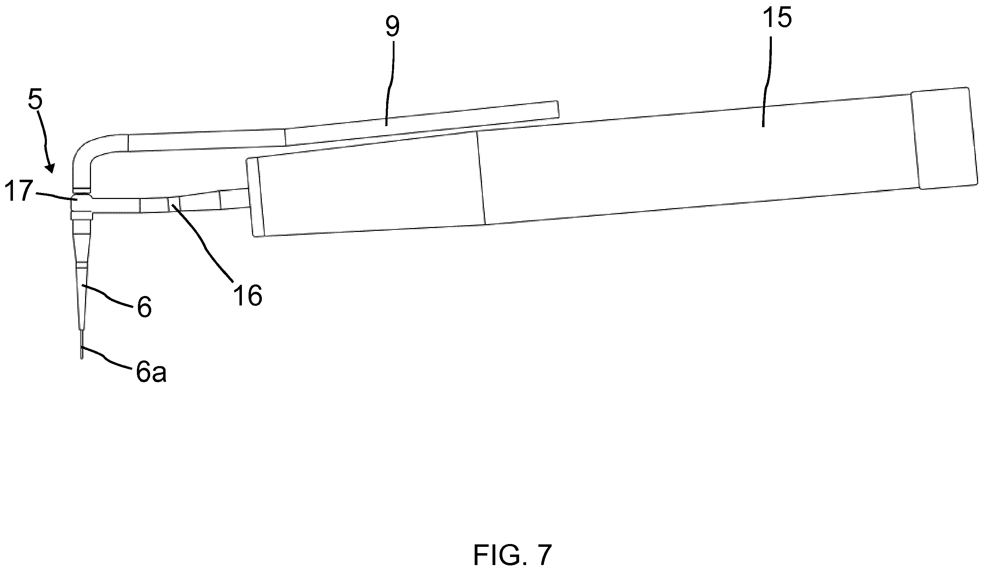

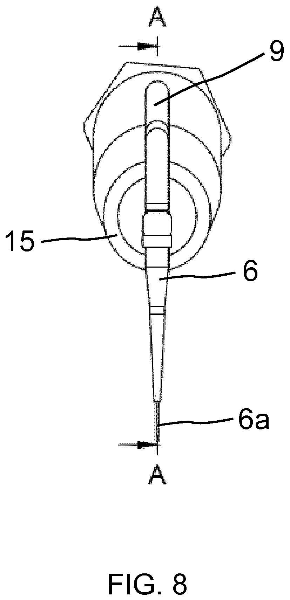

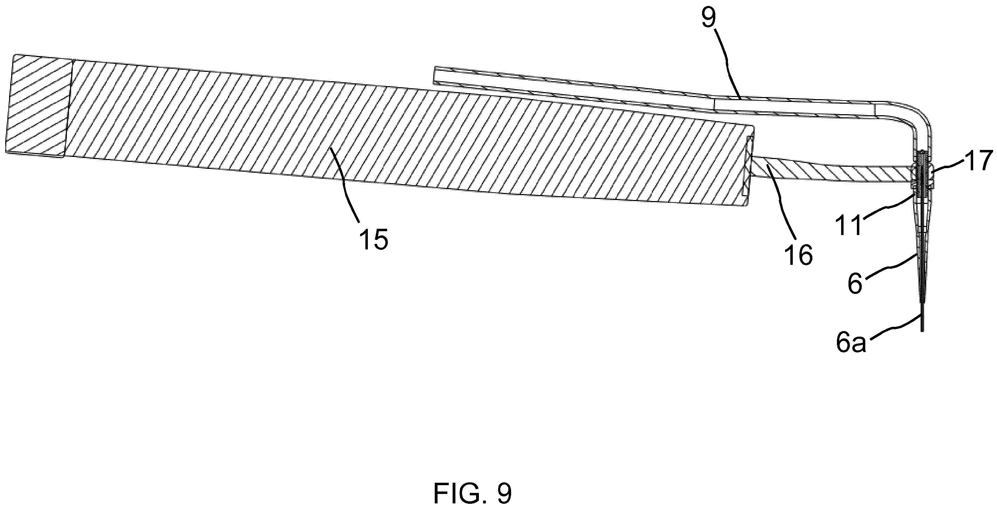

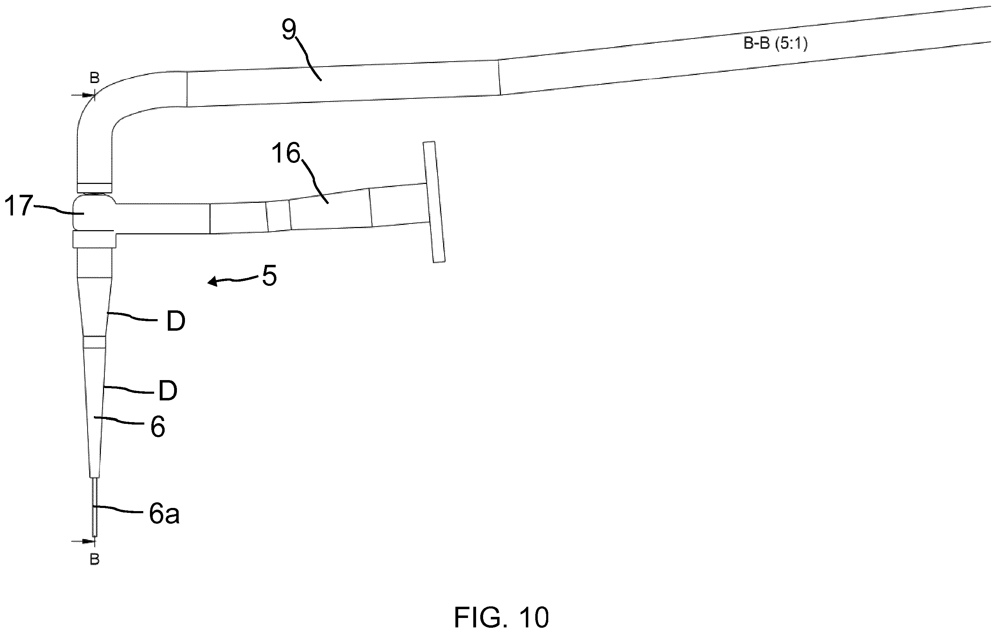

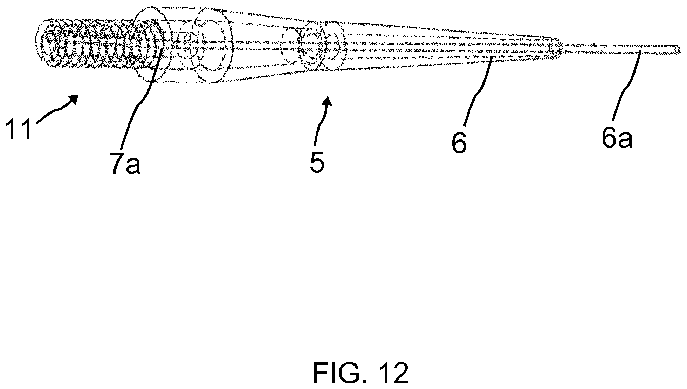

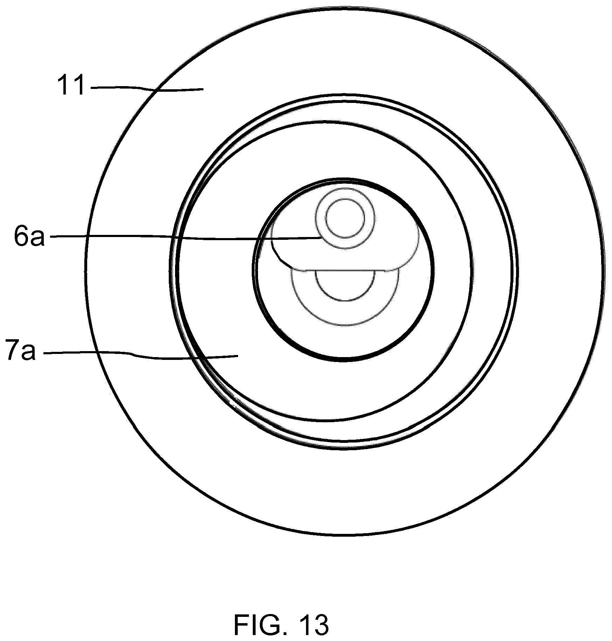

In den Figuren 6 bis 13 ist eine alternative Ausgestaltung eines Schallhandstücks 15 mit einer Halterung 16 und einem Absaugelement 5 für die Zahnwurzelkanal-Spülanordnung aus Figur 1 dargestellt. Wie insbesondere die Figuren 9, 11 und 12 erkennen lassen, umfasst das Absaugelement 5 eine länglich ausgestaltete Absaugspitze 6, die aus einem flexiblen Kunststoffmaterial besteht und nach Art einer Absaugkanüle hohl ausgestaltet ist. Wie in den Figuren ohne weiteres erkennbar ist, besitzt die Absaugspitze 6 eine Außenkontur, die sich ausgehend vom hinteren Ende der Absaugspitze 6 zu deren vorderen Ende hin verjüngt. Dabei ist das hintere, offene Ende der Absaugspitze 6 auf ein zylindrisches Verbindungsteil 11 aufgesteckt und an diesem fixiert. In bereits erläuterter Weise besitzt das Verbindungsteil 11 ein Außengewinde, über welches es in die Halterung 16 eingeschraubt ist, welche an dem Schallhandstück 15 fixiert ist, so dass von dem Schallhandstück 15 erzeugte Vibrationen/Schwingungen in das Absaugelement 5 eingeleitet werden können. Dabei ist in dem Absaugelement 5 zentral ein Absaugkanal 7 ausgebildet, der sich ausgehend vom hinteren Ende des Verbindungsteils 11 bis zu dem vorderen offenen Ende der Absaugspitze 6 erstreckt, wobei ein Absaugkanalabschnitt 7a in dem Verbindungsteil 11 ausgebildet ist. An das Verbindungsteil 11 ist die zur Unterdruckeinrichtung 2 führende Leitung 9 angeschlossen.

Das Absaugelement 5 weist zusätzlich einen Innenschwinger 6a auf, welcher in dem Absaugkanalabschnitt 7a des Verbindungselements fixiert ist, sich durch die Absaugspitze 6 erstreckt und aus deren vorderen Ende vorsteht. Dabei sind die Absaugspitze 6 und der Innenschwinger 6a über das Verbindungsteil 11 miteinander verbunden.

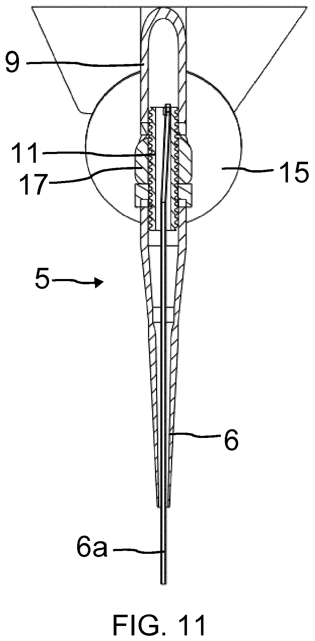

In der Ausgestaltung nach Figur 11 ist der Innenschwinger 6a aus einem Vollmaterial hergestellt, hier einem mit Kunststoff ummantelten Draht, wobei diese Ausführungsform nicht unter die Ansprüche fällt. Gemäß der Erfindung ist es möglich, den Innenschwinger 6a hohl auszubilden, wobei dann bevorzugt aus einen Kunststoffmaterial besteht.

Die Außenkontur der Absaugspitze 6 ist so gewählt, dass sie bei Einschieben der Absaugspitze 6 in einen Zahnwurzelkanal mit der Zahnwurzelkanalwandung ab einer gewissen Einführtiefe in Kontakt tritt und somit den Zahnwurzelkanal zwischen der Zahnwurzelkanalwandung und der Absaugspitze abdichtet. In der Folge dieser Abdichtung entsteht bei der Zahnwurzelkanalbehandlung in dem Zahnwurzelkanal durch die Wirkung der Unterdruckeinrichtung 2 ein Unterdruck, welcher schlagartig wieder abfällt, wenn das Absaugelement 5 wieder aus dem Zahnwurzelkanal herausgezogen wird. Durch wechselndes Einführen/Herausziehen der Absaugspitze 6 in den/aus dem Zahnwurzelkanal können also im Wechsel Stoßwellen erzeugt werden, wobei sich gleichzeitig die in dem Zahnwurzelkanal und der darin befindlichen Spüllösung enthaltenen Luftblasen ausdehnen und kollabieren, wodurch die Reinigung des Zahnwurzelkanals unterstützt wird.

Wenn die Absaugspitze 6 den Zahnwurzelkanal verschließt, führt dies gleichzeitig dazu, dass Vibrationen, die über das Schallhandstück 15 in das Absaugelement 5 eingeleitet werden, die Absaugspitze 6 nicht mehr oder kaum noch in Schwingungen versetzen können. Der Innenschwinger 6a hingegen schwingt weiter, so dass die Spülflüssigkeit durch das vibrierende, aus der Absaugspitze 6 herausragende vordere Ende des Innenschwingers 6a weiterhin angeregt wird.

Wie die Figuren zeigen, weist die Absaugspitze 6 außenseitig mehrere konische Abschnitte auf, die als Dichtungsabschnitt D ausgebildet und dimensioniert sind, um den Zahnwurzelkanal wie beschrieben dichtend zu verschließen.

### Bezugszeichenliste

- 1: Unterdruck-Spülanordnung
- 2: Unterdruckeinrichtung
- 3: Vakuumpumpe
- 4: Unterdruck- und Auffangbehälter
- 5: Absaugelement
- 6: Absaugspitze
- 6a: Innenschwinger
- 7: Absaugkanal
- 7a: Absaugkanalabschnitt
- 8: Ansaugöffnung
- 9: Leitung
- 10: Pfeile
- 11: Verbindungsteil
- 12: zylindrischer Abschnitt
- 13: Steckabschnitt
- 14: Wulst
- 15: Schallhandstück
- 16: Halterung
- 16a: Halterungskörper
- 16b: Kupplungsmittel
- 17: Haltering
- 17a: Durchgangsöffnung
- 18: Ventileinrichtung
- 19: Innenschwinger
- D: Dichtungsabschnitt

## Patentansprüche

1. Zahnwurzelkanal-Spülanordnung zum Reinigen von Zahnwurzelkanälen eines Patienten, mit
einer Unterdruckeinrichtung (2),
einem Absaugelement (5) mit einer länglich ausgestalteten Absaugspitze (6), die zumindest teilweise aus einem flexiblen Material besteht und an einem vorderen Ende des Absaugelements (5) positioniert ist, und
einer Schalleinrichtung mit einem Schallhandstück (15),
wobei in dem Absaugelement (5) ein Absaugkanal (7) ausgebildet ist, der sich ausgehend von dem hinteren Ende des Absaugelements (5) in Richtung von dessen vorderem Ende bis in die Absaugspitze (6) erstreckt,
die Absaugspitze (6) wenigstens eine Ansaugöffnung (8) aufweist, welche in den Absaugkanal (7) mündet, und
das hintere Ende des Absaugelements (5) über eine Leitung (9), insbesondere durch einen Verbindungsschlauch, mit der Unterdruckeinrichtung (2) verbunden ist, so dass eine Spülflüssigkeit mit darin enthaltenen Geweberesten und/oder Bakterien mittels eines von der Unterdruckeinrichtung (2) erzeugten Unterdrucks über die wenigstens eine Ansaugöffnung (8) in den Absaugkanal (7) und über diesen zur Unterdruckeinrichtung (2) gesaugt werden kann,
wobei das Absaugelement (5) einen Innenschwinger (6a) aufweist, der in der Absaugspitze (6) gehalten ist und aus deren vorderem Ende ragt, und wobei der Innenschwinger (6a) hohl ausgebildet ist, wobei die Absaugspitze (6) derart elastisch ausgebildet und dimensioniert ist, dass sie in einen Zahnwurzelkanal einführbar ist,
wobei das Absaugelement (5) lösbar an dem distalen Ende des Schallhandstücks (15) angebracht ist, so dass von dem Schallhandstück (15) erzeugte Schallvibrationen in das Absaugelement (5) eingeleitet werden können, um die Absaugspitze (6) in Schwingungen zu versetzen, und
wobei die Absaugspitze (6) und der Innenschwinger (6a) an ihrem hinteren Ende miteinander verbunden sind, wobei das Absaugelement (5) ein Verbindungsteil (11) aufweist, das Befestigungsmittel zur lösbaren Aufbringung der Absaugspitze (6) an dem Schallhandstück (15) aufweist, wobei an das Verbindungsteil (11) die Leitung (9) angeschlossen ist und in dem Verbindungsteil (11) ein Absaugkanalabschnitt (7a) ausgebildet ist, und wobei die Absaugspitze (6) und der Innenschwinger (6a) an ihrem hinteren Ende jeweils an dem Verbindungsteil (11) fixiert und so miteinander verbunden sind, wobei der Innenschwinger (6a) in den Absaugkanalabschnitt (7a) eingreift und dort an dem Verbindungsteil (11) fixiert ist.

2. Zahnwurzelkanal-Spülanordnung nach Anspruch 1, **dadurch gekennzeichnet, dass** der Innenschwinger (6a) aus Kunststoff und/oder aus Metall und/oder aus kunststoffbeschichtetem Metall besteht, und/oder dass der Innenschwinger (6a) einen Außendurchmesser von >0,1 mm und/oder <0,5mm aufweist.

3. Zahnwurzelkanal-Spülanordnung nach einem der vorherigen Ansprüche, **dadurch gekennzeichnet, dass** sich die Absaugspitze (6) zu ihrem vorderen Ende hin verjüngt, wobei die Absaugspitze (6) einen sich konisch verjüngenden Dichtungsabschnitt (D) aufweist, welcher derart elastisch ausgebildet und dimensioniert ist, dass er beim Einführen der Absaugspitze (6) in einen Zahnwurzelkanal diesen im Bereich der Zahnwurzelkanalwandung dichtend verschließt, wobei - bevorzugt - die Außendurchmesser des konischen Dichtungsabschnitts (D) der Absaugspitze (6) ≥ 0,4mm, insbesondere ≥ 0,5mm und/oder ≤ 1,4 mm, insbesondere ≤ 1,2 mm sind.

4. Zahnwurzelkanal-Spülanordnung nach einem der vorherigen Ansprüche, **dadurch gekennzeichnet, dass** die Absaugspitze (6) auf das Verbindungsteil (11) gesteckt ist.

5. Absaugelement zum Absaugen von Spülflüssigkeit aus einem zu reinigenden Zahnwurzelkanal eines Patienten mit einer länglich ausgestalteten Absaugspitze (6), die zumindest teilweise aus einem flexiblen Material besteht, und an einem vorderen Ende des Absaugelements (5) positioniert ist, wobei das Absaugelement (5) einen Absaugkanal (7) aufweist, der sich ausgehend von dem hinteren Ende des Absaugelements (5) in Richtung von dessen vorderem Ende bis in die Absaugspitze (6) erstreckt, und
wobei die Absaugspitze (6) wenigstens eine Ansaugöffnung (8) aufweist, welche in den Absaugkanal (7) mündet, wobei das Absaugelement (5) einen Innenschwinger aufweist, der in der Absaugspitze gehalten ist und aus deren vorderem Ende ragt, und wobei der Innenschwinger (6a) hohl ausgebildet ist,
wobei die Absaugspitze (6) derart elastisch ausgebildet und dimensioniert ist, dass sie in einen Zahlwurzelkanal einführbar ist,
wobei die Absaugspitze (6) und der Innenschwinger (6a) an ihrem hinteren Ende miteinander verbunden sind, wobei das Absaugelement (5) ein Verbindungsteil (11) aufweist, das Befestigungsmittel zur lösbaren Aufbringung der Absaugspitze (6) an dem Schallhandstück (15) aufweist, wobei an das Verbindungsteil (11) eine Leitung (9) zur Verbindung mit einer Unterdruckeinrichtung (2) angeschlossen werden kann und in dem Verbindungsteil (11) ein Absaugkanalabschnitt (7a) ausgebildet ist, und wobei die Absaugspitze (6) und der Innenschwinger (6a) an ihrem hinteren Ende jeweils an dem Verbindungsteil (11) fixiert und so miteinander verbunden sind, wobei der Innenschwinger (6a) in den Absaugkanalabschnitt (7a) eingreift und dort an dem Verbindungsteil (11) fixiert ist.

6. Absaugelement nach Anspruch 5, **dadurch gekennzeichnet, dass** der Innenschwinger aus Kunststoff und/oder aus Metall und/oder aus kunststoffbeschichtetem Metall besteht.

7. Absaugelement nach Anspruch 5 oder 6, **dadurch gekennzeichnet, dass** der Innenschwinger (6a) einen Außendurchmesser von ≥ 0,1 mm und/oder ≤ 0,5mm aufweist.

8. Absaugelement nach einem der Ansprüche 5 bis 7, **dadurch gekennzeichnet, dass** sich die Absaugspitze (6) zu ihrem vorderen Ende hin verjüngt und einen sich konisch verjüngenden Dichtungsabschnitt (D) aufweist, welcher derart elastisch ausgebildet und dimensioniert ist, dass er beim Einführen der Absaugspitze (6) in einen Wurzelkanal diesen dichtend verschließt, wobei bevorzugt die Außendurchmesser des konischen Dichtungsabschnitts (D) der Absaugspitze ≥ 0,4mm, insbesondere ≥ 0,5mm und/oder ≤ 1,4 mm, insbesondere ≤ 1,2 mm sind.

9. Absaugelement nach einem der Ansprüche 5 bis 8, **dadurch gekennzeichnet, dass** die Absaugspitze mehrere Ansaugöffnungen (8) aufweist, welche eine Wandung der Absaugspitze (6) ausgehend von einer äußeren Mantelfläche der Absaugspitze (6) durchsetzen und in den Absaugkanal (7) münden.

10. Absaugelement nach Anspruch 9, **dadurch gekennzeichnet, dass** die Ansaugöffnungen (8) am vorderen Ende der Absaugspitze (6) gelegen sind, und/oder dass jeweils mehrere Ansaugöffnungen (8) in der Längsrichtung der Absaugspitze (6) hintereinanderliegend in der Mantelfläche der Absaugspitze (6) ausgebildet sind, und/oder dass jeweils mehrere Ansaugöffnungen (8) entlang des Umfangs der Absaugspitze (6) verteilt, insbesondere gleichmäßig verteilt, in der Mantelfläche der Absaugspitze (6) ausgebildet sind, und/oder dass mehrere Reihen von in der Längsrichtung der Absaugspitze (6) hintereinanderliegenden und miteinander fluchtenden Ansaugöffnungen (8) in der Mantelfläche der Absaugspitze (6) ausgebildet sind und die Reihen entlang des Umfangs der Absaugspitze (6) verteilt sind, wobei insbesondere die Ansaugöffnungen (8) von entlang des Umfangs benachbarten Reihen in der Längsrichtung zueinander versetzt sind.

## Claims

1. Dental root canal irrigation arrangement for cleaning dental root canals of a patient, with
a vacuum device (2),
a suction element (5) with an elongated suction tip (6), which is at least partially made of a flexible material and is positioned at a front end of the suction element (5), and
a sonic device having a sonic handpiece (15),
wherein a suction channel (7) is formed in the suction element (5), which extends from the rear end of the suction element (5) in the direction of its front end into the suction tip (6),
wherein the suction tip (6) has at least one suction opening (8) which opens into the suction channel (7), and
the rear end of the suction element (5) is connected to the vacuum device (2) via a conduit (9), in particular by a connecting hose, so that a rinsing liquid with tissue residues and/or bacteria contained therein can be sucked by means of a vacuum generated by the vacuum device (2) via the at least one suction opening (8) into the suction channel (7) and via the latter to the vacuum device (2),
wherein the suction element (5) has an inner oscillator (6a) which is held in the suction tip (6) and projects out of the front end thereof, and
wherein the inner oscillator (6a) is hollow,
wherein the suction tip (6) is designed elastically and dimensional in such a way that it can be introduced into a dental roof canal,
wherein the suction element (5) is detachably attached to the distal end of the sonic handpiece (15) so that sonic vibrations generated by the sonic handpiece (15) can be introduced into the suction element (5) to cause the suction tip (6) to vibrate and,
wherein the suction tip (6) and the inner oscillator (6a) are connected to one another at their rear end,
wherein the suction element (5) has a connecting part (11) that comprises attachment means for releasably attaching the suction tip at the sonic handpiece (15),
wherein the conduit (9) is connected to the connecting part (11) and a suction canal section (7a) is formed in the connecting part (11), and
wherein the suction tip (6) and the inner oscillator (6a) each fixed at their rear end to the connecting part (11) and are thus connected to one another,
wherein the inner oscillator (6a) engages in the suction channel section (7a) and is fixed there to the connecting part (11).

2. Dental root canal irrigation arrangement according to claim 1, **characterized in that** the inner oscillator (6a) consists of plastic and/or of metal and/or of plastic-coated metal, and/or that the inner oscillator (6a) has an outer diameter of >0.1 mm and/or <0.5mm.

3. Dental root canal irrigation arrangement according to one of the previous claims, **characterized in that** the suction tip (6) tapers towards its front end, the suction tip (6) having a conically tapering sealing section (D) which is designed elastically and dimensioned in such a way that, when the suction tip (6) is introduced into a tooth root canal, it seals the latter in the region of the tooth root canal wall,
wherein - preferably - the outer diameters of the conically tapering sealing section (D) of the suction tip (6) is ≥ 0,4 mm, in particular ≥ 0,5 mm and/or ≤ 1,4 mm, in particular ≤ 1,2 mm.

4. Dental root canal irrigation arrangement according to one of the previous claims, **characterized in that** suction tip (6) is plugged onto the connecting part (11).

5. Suction element for sucking irrigation liquid from a dental root canal of a patient to be cleaned, with an elongated suction tip (6) which consists at least partially of a flexible material, and is positioned at a front end of the suction element (5), wherein the suction element (5) has a suction channel (7) which, starting from the rear end of the suction element (5), extends in the direction of its front end into the suction tip (6), and wherein the suction tip (6) has at least one suction opening (8) which opens into the suction channel (7), wherein the suction element (5) has an inner oscillator (6a) which is held in the suction tip (6) and projects out of the front end thereof, and
wherein the inner oscillator (6a) is hollow,
wherein the suction tip (6) is designed elastically and dimensional in such a way that it can be introduced into a dental roof canal,
wherein the suction tip (6) and the inner oscillator (6a) are connected to one another at their rear end,
wherein the suction element (5) has a connecting part (11) that comprises attachment means for releasably attaching the suction tip at a sonic handpiece (15) wherein a conduit (9) can be connected to the connecting part (11) and a suction canal section (7a) is formed in the connecting part (11),
wherein the suction tip (6) and the inner oscillator (6a) each fixed at their rear end to the connecting part (11) and are thus connected to one another,
wherein the inner oscillator (6a) engages in the suction channel section (7a) and is fixed there to the connecting part (11).

6. Suction element according to claim 5, **characterized in,**
**in that** the inner oscillator consists in particular of plastic and/or of metal and/or of plastic-coated metal.

7. Suction element according to claim 5 or 6, **characterized in that** the inner oscillator (6a) has an outer diameter of ≥ 0.1 mm and/or ≤ 0.5mm.

8. Suction element according to one of claims 5 to 7, **characterized in that** the suction tip (6) tapers towards its front end and has a conically tapering sealing section (D), which is elastically formed and dimensioned in such a way that, when the suction tip (6) is introduced into a root canal, it seals the latter, wherein, preferably the outer diameters of the conical sealing section (D) of the suction tip are ≥ 0.4mm, in particular ≥ 0.5mm and/or ≤ 1.4 mm, in particular ≤ 1.2 mm.

9. Suction element according to one of the claims 5 to 8, **characterized in that** the suction tip has a plurality of suction openings (8) which penetrate the wall of the suction tip (6) starting from its outer lateral surface and open into the suction channel (7).

10. Suction element according to claim 9, **characterized in that** the suction openings (8) are located at the front end of the suction tip (6), and/or **in that** in each case a plurality of suction openings (8) are formed one behind the other in the longitudinal direction of the suction tip (6) in the lateral surface of the suction tip (6), and/or **in that** in each case a plurality of suction openings (8) are distributed along the circumference of the suction tip (6), in particular uniformly distributed, are formed in the circumferential surface of the suction tip (6), and/or **in that** a plurality of rows of suction openings (8) lying one behind the other in the longitudinal direction of the suction tip (6) and aligned with one another are formed in the circumferential surface of the suction tip (6), and the rows are distributed along the circumference of the suction tip (6), in particular the suction openings (8) of rows adjacent along the circumference being offset with respect to one another in the longitudinal direction.

## Revendications

1. Dispositif de rinçage des canaux radiculaires dentaires pour nettoyer les canaux radiculaires dentaires d'un patient, comprenant un dispositif à dépression (2),
un élément d'aspiration (5) avec une pointe d'aspiration (6) de forme allongée, qui est au moins partiellement constituée d'un matériau flexible et qui est positionnée à une extrémité avant de l'élément d'aspiration (5), et
d'un dispositif sonore avec une pièce à main sonore (15),
un canal d'aspiration (7) étant formé dans l'élément d'aspiration (5), lequel s'étend à partir de l'extrémité arrière de l'élément d'aspiration (5) en direction de son extrémité avant jusque dans la pointe d'aspiration (6),
la pointe d'aspiration (6) présentant au moins une ouverture d'aspiration (8) qui débouche dans le canal d'aspiration (7), et
l'extrémité arrière de l'élément d'aspiration (5) étant reliée au dispositif à dépression (2) par l'intermédiaire d'une conduite (9), en particulier par un tuyau de raccordement, de sorte qu'un liquide de rinçage contenant des résidus de tissu et/ou des bactéries peut être aspiré dans le canal d'aspiration (7) au moyen d'une dépression générée par le dispositif à dépression (2), par l'intermédiaire de l'au moins une ouverture d'aspiration (8) et, par l'intermédiaire de celle-ci, vers le dispositif à dépression (2),
dans lequel l'élément d'aspiration (5) présente un vibrateur intérieur (6a) qui est maintenu dans la pointe d'aspiration (6) et fait saillie de l'extrémité avant de celle-ci, et dans lequel le vibrateur intérieur (6a) est creux, la pointe d'aspiration (6) étant réalisée et dimensionnée de manière élastique de telle sorte qu'elle puisse être introduite dans un canal de racine dentaire,
dans lequel l'élément d'aspiration (5) est fixé de manière amovible à l'extrémité distale de la pièce à main sonore (15), de sorte que les vibrations sonores générées par la pièce à main sonore (15) peuvent être introduites dans l'élément d'aspiration (5) pour faire vibrer la pointe d'aspiration (6), et
la pointe d'aspiration (6) et le vibrateur intérieur (6a) étant reliés l'un à l'autre à leur extrémité arrière, l'élément d'aspiration (5) présentant une partie de liaison (11) qui présente des moyens de fixation pour le montage amovible de la pointe d'aspiration (6) sur la pièce à main sonore (15), la conduite (9) étant raccordée à la partie de liaison (11) et une section de canal d'aspiration (7a) étant formée dans la partie de liaison (11), et la pointe d'aspiration (6) et le vibrateur intérieur (6a) étant fixés chacun à leur extrémité arrière sur la pièce de liaison (11) et étant ainsi reliés entre eux, le vibrateur intérieur (6a) s'engageant dans la section de canal d'aspiration (7a) et y étant fixé sur la pièce de liaison (11).

2. Dispositif d'irrigation du canal radiculaire dentaire selon la revendication 1, **caractérisé en ce que** le vibrateur interne (6a) est constitué de matière plastique et/ou de métal et/ou de métal revêtu de matière plastique, et/ou **en ce que** le vibrateur interne (6a) présente un diamètre extérieur de >0,1 mm et/ou <0,5 mm.

3. Dispositif d'irrigation du canal radiculaire dentaire selon l'une des revendications précédentes, **caractérisé en ce que** la pointe d'aspiration (6) se rétrécit en direction de son extrémité avant, la pointe d'aspiration (6) présentant une section d'étanchéité (D) se rétrécissant de manière conique, qui est réalisée et dimensionnée de manière élastique, de telle sorte que, lors de l'introduction de la pointe d'aspiration (6) dans un canal radiculaire dentaire, elle obture de manière étanche ce dernier dans la zone de la paroi du canal radiculaire dentaire , les diamètres extérieurs de la section d'étanchéité conique (D) de la pointe d'aspiration (6) étant - de préférence -≥ 0,4 mm, no-tamment≥ 0,5 mm et/ou≤ 1,4 mm, notamment≤ 1,2 mm.

4. Ensemble d'irrigation du canal radiculaire dentaire selon l'une des revendications précédentes, **caractérisé en ce que** la pointe d'aspiration (6) est enfichée sur la pièce de liaison (11).

5. Elément d'aspiration pour aspirer du liquide de rinçage d'un canal radiculaire dentaire à nettoyer d'un patient, avec une pointe d'aspiration (6) de forme allongée, qui est constituée au moins partiellement d'un matériau flexible, et qui est positionnée à une extrémité avant de l'élément d'aspiration (5), l'élément d'aspiration (5) présentant un canal d'aspiration (7) qui s'étend à partir de l'extrémité arrière de l'élément d'aspiration (5) en direction de son extrémité avant jusque dans la pointe d'aspiration (6), et
la pointe d'aspiration (6) présentant au moins une ouverture d'aspiration (8) qui débouche dans le canal d'aspiration (7), l'élément d'aspiration (5) présentant un vibrateur intérieur qui est maintenu dans la pointe d'aspiration et qui dépasse de l'extrémité avant de celle-ci, et le vibrateur intérieur (6a) étant réalisé creux, la pointe d'aspiration (6) étant réalisée et dimensionnée de manière élastique de telle sorte qu'elle puisse être introduite dans un canal de racine de comptage,
la pointe d'aspiration (6) et le vibrateur intérieur (6a) étant reliés l'un à l'autre à leur extrémité arrière, l'élément d'aspiration (5) présentant une partie de liaison (11) qui présente des moyens de fixation pour le montage amovible de la pointe d'aspiration (6) sur la pièce à main sonore (15), une conduite (9) pouvant être raccordée à la partie de liaison (11) pour la liaison avec un dispositif à dépression (2) et une section de canal d'aspiration (7a) étant formée dans la partie de liaison (11), et dans lequel la pointe d'aspiration (6) et le vibrateur intérieur (6a) sont respectivement fixés à leur extrémité arrière sur la pièce de liaison (11) et sont ainsi reliés entre eux, le vibrateur intérieur (6a) s'engageant dans la section de canal d'aspiration (7a) et y étant fixé sur la pièce de liaison (11).

6. Elément d'aspiration selon la revendication 5, **caractérisé en ce que** le vibrateur interne est en matière plastique et/ou en métal et/ou en métal revêtu de matière plastique.

7. Elément d'aspiration selon la revendication 5 ou 6, **caractérisé en ce que** le vibrateur interne (6a) présente un diamètre extérieur de≥ 0,1 mm et/ou ≤ 0,5mm.

8. Elément d'aspiration selon l'une des revendications 5 à 7, **caractérisé en ce que** la pointe d'aspiration (6) se rétrécit en direction de son extrémité avant et présente une section d'étanchéité (D) se rétrécissant de manière conique, qui est réalisée et dimensionnée de manière élastique, que lors de l'introduction de la pointe d'aspiration (6) dans un canal radiculaire, elle ferme celui-ci de manière étanche, les diamètres extérieurs de la section d'étanchéité conique (D) de la pointe d'aspiration étant de préférence≥ 0,4 mm, en particulier ≥ 0,5 mm et/ou≤ 1,4 mm, en particulier≤ 1,2 mm.

9. Elément d'aspiration selon l'une des revendications 5 à 8, **caractérisé en ce que** la pointe d'aspiration présente plusieurs orifices d'aspiration (8) qui traversent une paroi de la pointe d'aspiration (6) en partant d'une surface latérale extérieure de la pointe d'aspiration (6) et qui débouchent dans le canal d'aspiration (7).

10. Elément d'aspiration selon la revendication 9, **caractérisé en ce que** les ouvertures d'aspiration (8) sont situées à l'extrémité avant de la pointe d'aspiration (6), et/ou **en ce que** plusieurs ouvertures d'aspiration (8) sont respectivement formées dans la direction longitudinale de la pointe d'aspiration (6), l'une derrière l'autre, dans la surface d'enveloppe de la pointe d'aspiration (6), et/ou **en ce que** plusieurs ouvertures d'aspiration (8) sont respectivement réparties le long de la périphérie de la pointe d'aspiration (6), en particulier réparties uniformément, dans la surface d'enveloppe de la pointe d'aspiration (6), et/ou **en ce que** plusieurs rangées d'ouvertures d'aspiration (8) alignées les unes avec les autres et situées les unes derrière les autres dans la direction longitudinale de la pointe d'aspiration (6) sont formées dans la surface d'enveloppe de la pointe d'aspiration (6) et les rangées sont réparties le long de la périphérie de la pointe d'aspiration (6), les ouvertures d'aspiration (8) de rangées voisines le long de la périphérie étant notamment décalées les unes par rapport aux autres dans la direction longitudinale.
